# NEUE EUROPÄISCHE PATENTSCHRIFT

(11) **EP 0 803 389 B2**
(45) Veröffentlichungstag und Bekanntmachung des Hinweises auf die Entscheidung über den Einspruch: **24.05.2006**
(45) Hinweis auf die Patenterteilung: 21.11.2001
(21) Anmeldenummer: 97106226.0
(22) Anmeldetag: 16.04.1997
(51) Int. Cl.: B60J 5/04

(54) **Fahrzeugtür**
Vehicle door
Porte de véhicule

(30) Priorität: 26.04.1996 DE 19616788
(43) Veröffentlichungstag der Anmeldung: 29.10.1997
(73) Patentinhaber: Bayerische Motoren Werke Aktiengesellschaft, 80788 München (DE); Heim, Gunther, 64367 Mühltal (DE); Acts Gmbh & Co. KG, 63877 Sailauf (DE)
(72) Erfinder: Heim, Gunther, 63110 Rodgau (DE); Schütt, Stephan, 65428 Rüsselsheim (DE); Schneider, Wolfgang, 83362 Surberg (DE); Reitemeyer, Rainer, 85716 Unterschleissheim (DE)
(74) Vertreter: Truckenmüller, Frank

(56) Entgegenhaltungen:
- EP-A- 0 274 985
- EP-A- 0 476 351
- EP-A- 0 638 451
- DE-A- 4 430 862
- DE-A1- 2 916 817
- DE-A1- 4 008 111
- DE-A1- 4 116 834
- DE-A1- 4 224 423
- DE-A1- 4 300 398
- DE-A1- 4 431 991
- DE-A1- 19 519 509
- DE-C2- 4 242 896
- GB-A- 2 042 386
- Zeitschrift "Blech Rohre Profile", 42 (1995) 2, S.94-99
- Lehrbuch "Fachkunde Metall", 48.Auflage, 1987, S.214,215,220,222,223,235,236
- VDI-Lexikon Maschinenbau, VDI-Verlag, Düsseldorf, 1995 S.253,1245-1246,1306
- Vieweg Handbuch Kraftfahrzeugtechnik, 2.Auflage 2001

## Beschreibung

Die Erfindung betrifft eine Fahrzeugtür mit einer Außenwand, einer Innenwand und einem Türgerippe.

Aus der EP 0 274 985 B1 ist eine Fahrzeugtür bekannt, bei welcher das zwischen der Außenwand und der Innenwand angeordnete Türgerippe im wesentlichen aus einem einteiligen Gussteil besteht, welches sowohl den Schloß- und den Scharnierträger als auch ein die beiden Träger miteinander verbindendes Untergurtprofil umfasst. Zwischen Schloß- und Scharnierträger ist ferner mindestens eine Querstrebe angeordnet, die aus einem Strangpreßprofil besteht, und die sowohl eine Versteifung des Türgerippes bewirkt als auch zur Aufnahme von Türteilen dienen kann. Diese Querstrebe soll von dem Untergurtprofil einen vorgegebenen Abstand besitzen und befindet sich in dem in Fig. 1 der EP 0 274 985 B1 dargestellten Ausführungsbeispiel etwa im unteren Drittel der Fahrzeugtür.

Nachteilig ist bei diesen bekannten Fahrzeugtüren unter anderem, dass sie nur sehr kostenintensiv herstellbar sind. Einerseits muss ein relativ großes Formteil gegossen werden, welches in der Regel nur für einen ganz bestimmten Fahrzeugtyp verwendbar ist. Andererseits müssen zur Versteifung des Türgerippes zusätzliche Querstreben hergestellt werden, die gleichzeitig das Aufprallverhalten der Fahrzeugtür verbessern sollen. Denn es hat sich gezeigt, dass ein als Gussteil ausgebildetes Untergurtprofil bei höheren Beanspruchungen (seitlicher Aufprall) relativ schnell bricht, weil einerseits die Bruchdehnung von Druckgussteilen gering ist und andererseits bei einem seitlichen Aufprall die Belastung im Bereich des Untergurtprofils besonders hoch ist.

Aus der EP 0 476 351 B1 ist ferner eine Fahrzeugtür in Stahl-Blechbauweise bekannt, bei der an einem relativ steifen Türinnenblech ein entsprechender aus separatem Schloß- und Scharnierträger bestehender Aggregateträger angeschweißt ist. Die beiden Trägerteile werden oberseitig durch eine profilierte stabförmige Fensterschachtverstärkung miteinander verbunden.

Nachteilig bei einem derartigen Türaufbau ist sowohl das hohe Gewicht der Tür aufgrund der verwendeten Stahlbleche als auch die relativ aufwendige Herstellung derartiger Türen.

Aus der DE 40 08 111 ist eine Fahrzeugtür mit einer Außenwand, einer Innenwand und einem Türgerippe bekannt geworden, welches sowohl einen Schlossträger und einen Scharnierträger als auch ein den Schloss- und den Scharnierträger unterseitig verbindendes Untergurtprofil umfasst. Der Schloss- und der Scharnierträger bestehen jeweils aus einem Leichtmetall-Gussteil. Bei dem Untergurtprofil handelt es sich um ein Strangpressprofil, wobei das Untergurtprofil an dem Schlossträger und an dem Scharnierträger mit Hilfe von Nietverbindungen befestigt ist.

Die Herstellung derartiger Fahrzeugtüren ist noch immer vergleichsweise aufwändig

Der Erfindung liegt die Aufgabe zugrunde, eine Fahrzeugtür anzugeben, die kostengünstig herstellbar ist, ein geringes Gewicht aufweist und ein gutes Aufprallverhalten besitzt.

Diese Aufgabe wird erfindungsgemäß durch die Merkmale des Anspruches 1 gelöst. Weitere besonders vorteilhafte Ausgestaltungen der Erfindung offenbaren die Unteransprüche.

Die Erfindung beruht im wesentlichen auf dem Gedanken, Schloß- und Scharnierträger sowie das Untergurtprofil zunächst als separate Bauteile herauszustellen und dann zu einem rahmenförmigen selbsttragenden Türgerippe miteinander zu verbinden, an welchem die Innen- und die Außenwand befestigbar ist. Dabei handelt es sich bei dem Schloß- und dem Scharnierträger jeweils um ein Leichtmetall-Druckgußteil und bei dem Untergurtprofil um ein Strangpreß- oder Rollprofilteil.

Durch die Verwendung von Druckgussteilen ist es möglich, sowohl in den Schloß- als auch in den Scharnierträger eine Vielzahl von Funktionsteilen zu integrieren. So kann beispielsweise die Druckgussform derart ausgestaltet sein, dass der Scharnierträger bereits türseitige Scharniere und/oder eine Aufnahme für das Spiegeldreieck besitzt. Der Schlossträger kann bereits mit einer integrierten Schlossplatte hergestellt werden. Beide Teile können mit integrierten Befestigungsdomen für Schrauben oder Clipse etc. sowie mit Versteifungsrippen gegossen werden.

Die separate Herstellung der beiden Druckgußteile ist aufgrund der geringen Abmessungen verfahrenstechnisch einfach und erlaubt die Verwendung dieser Teile zum Aufbau unterschiedlicher Türgerippe, etwa für Fahrzeugtüren unterschiedlicher Varianten eines Fahrzeugmodells.

Schließlich ist es auf einfache Weise möglich, die Wandstärke des jeweiligen Druckgussteiles ortsabhängig zu variieren, so dass sie an die erforderliche Belastbarkeit in den einzelnen Teilbereichen des Druckgußteiles angepasst werden kann.

Um zu erreichen, dass der Schloß- und/oder der Scharnierträger eine ausreichend hohe Duktilität und Schweißbarkeit besitzt, werden diese Träger vorzugsweise nach dem Vacuralguß-, Thixocasting- oder Thixomoulding-Verfahren hergestellt.

Durch die Ausgestaltung des Untergurtprofiles als Strangpreßteil oder Rollprofil ist eine ausreichende Bruchdehnung bei einem Seitenaufprall gewährleistet.

Als besonders vorteilhaft hat es sich erwiesen, wenn der Schloß- und der Scharnierträger mit dem Untergurtprof il mit Hilfe von Stanznieten verbunden werden. Dadurch kann die Fahrzeugtür besonders kostengünstig hergestellt werden und selbst bei hohen seitlichen Aufprallkräften auf die Fahrzeugtür ist in diesem Fall eine sichere Verbindung zwischen den einzelnen Trägern gewährleistet.

Demgegenüber haben sich beim Verbinden des Schloß- und des Scharnierträgers mit dem Untergurtprofil durch Verschweißen in der Praxis Probleme ergeben, weil es durch die starke lokale Erwärmung (Wärmeeinflusszonen) in den Materialien zu Spannungen kommt, die bei einem Aufprall zum Brechen der Schweißverbindungen führen können.

Damit das Türgerippe ein möglichst geringes Gewicht aufweist, hat es sich als vorteilhaft erwiesen, sowohl die Druckgussteile als auch das Strangpressteil aus einer Aluminium- und/oder Magnesiumlegierung herzustellen.

Weitere Einzelheiten und Vorteile der Erfindung ergeben sich aus den folgenden anhand von Figuren erläuterten Ausführungsbeispielen. Es zeigen:
- Fig. 1: die wesentlichen Teile eines erfindungsgemäßen Türgerippes vor dessen Zusammenbau,
- Fig.2: ein aus den in Fig.1 dargestellten Einzelteilen zusammengesetztes Türgerippe und
- Fig.3: den Querschnitt durch einen Scharnierträger eines weiteren Ausführungsbeispieles der Erfindung.

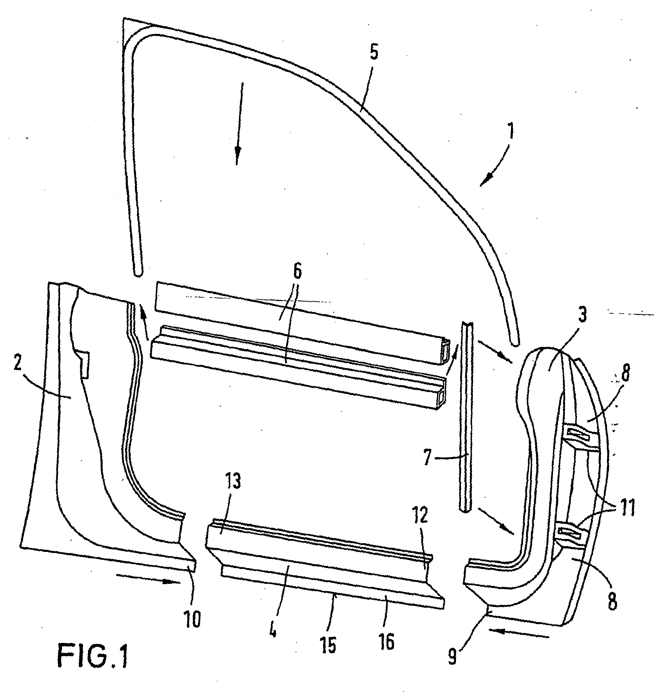

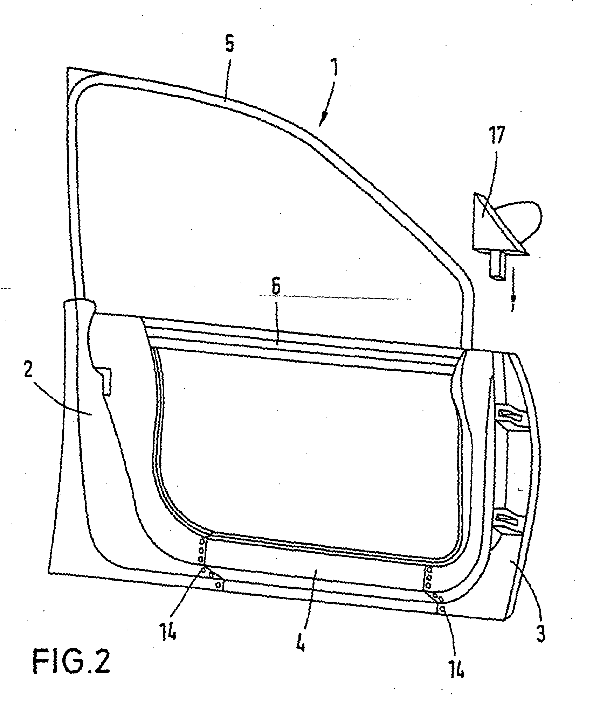

In den Fig.1 und 2 ist mit 1 ein Türgerippe bezeichnet, das sich im wesentlichen aus einem Schloßträger 2, einem Scharnierträger 3, einem Untergurtprofil 4 sowie einem Fensterrahmen 5 und einem Fensterschachtprofil 6 zusammensetzt. Wie Fig.1 entnehmbar, kann zusätzlich beispielsweise ein Fensterführungsprofil 7 zur Führung der nicht dargestellten Scheibe vorgesehen sein.

Bei dem Schloßträger 2 und dem Scharnierträger 3 handelt es sich um Aluminium-Druckgußteile, die vorzugsweise mit Hilfe des Vacuralgußverfahrens hergestellt werden, damit diese Teile eine entsprechende hohe Duktilität und Schweißbarkeit aufweisen.

Die Wandstärke der Druckgußteile 2, 3 wird derart dimensioniert, daß sie einen relativ großen Durchmesser in Bereichen aufweist, in denen bei der bestimmungsgemäßen Verwendung der Tür hohe Kräfte auftreten können. Dieses ist beispielsweise bei dem Scharnierträger 3 in dem Bereich 8 der Scharnieranbindung der Fall. Hingegen sind die Druckgußteile 2, 3 in Bereichen 9, 10, in denen sich Bördelkanten zum Umbördeln der nicht dargestellten Außen- bzw. Innenwand befinden, wesentlich dünner ausgebildet.

Wie den Fig.1 und 2 entnehmbar, sind die türseitigen Scharniere 11 direkt in den Scharnierträger 3 integriert.

Bei dem Untergurtprofil 4 handelt es sich um ein Aluminium-Strangpreßprofil, welches auf seinen dem Schloßträger 2 und dem Scharnierträger 3 zugewandten Enden 12, 13 mit diesen Teilen mit Hilfe von Stanznieten 14 (Fig.2) verbunden ist. Auf seiner Unterseite 15 ist das Untergurtprofil 4 ebenfalls mit einer Bördelkante 16 versehen.

Die Erfindung ist selbstverständlich nicht auf das vorstehend beschriebene Ausführungsbeispiel beschränkt. So können die Träger 2, 3 und 4 zusätzlich in den Randbereichen, in denen sie vernietet sind, auch verklebt werden, um eine gute Abdichtung gegen Kondensationswasser zu gewährleisten.

Ferner kann beispielsweise bei der Herstellung des Scharnierträgers zusätzlich eine Ausnehmung für ein in Fig.2 mit 17 bezeichnetes Spiegeldreieck vorgesehen werden.

Besonders bewährt hat es sich, den Scharnierträger derart auszubilden, daß er zwar im Bereich unterhalb der Türbrüstung der inneren Türkontur folgt, im Bereich oberhalb der Türbrüstung aber nach außen bricht und in einem vorgegebenen Bereich die Türaußenfläche darstellt. Dadurch lassen sich die Außenspiegel auf sehr einfache Weise direkt an der Türaußenseite anordnen. Außerdem weist eine derartige Anordnung aerodynamische Vorteile im Anbindungsbereich des Außenspiegels auf. Die Herstellung einer derartigen Scharnierträgerstruktur ist dadurch, daß es sich bei dem Scharnierträger um ein Gußteil handelt, auf einfache Weise möglich.

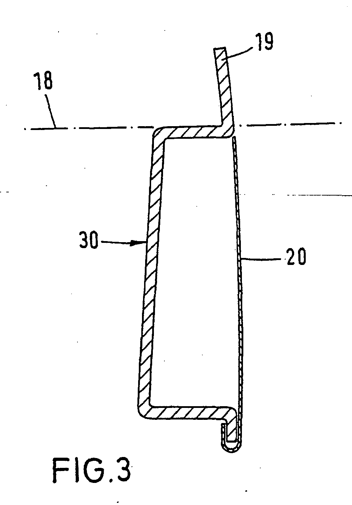

Ein entsprechendes Ausführungsbeispiel ist in Fig.3 wiedergegeben. Dabei ist der entsprechende Scharnierträger mit 30 bezeichnet. Unterhalb der gestrichelt angedeuteten Türbrüstung 18 folgt der Scharnierträger 30 -ähnlich wie bei dem in den Fig.1 und 2. dargestellten Ausführungsbeispiel- im wesentlichen der inneren Türkontur. Im Bereich oberhalb der Türbrüstung 18 ist der Scharnierträger 30 hingegen nach außen gebrochen und bildet hier in einem vorgebbaren Bereich 19 einen Tell derTüraußenfläche. Mit 20 ist in Flg.3 das Außenhautblech der entsprechenden Tür bezeichnet.

### Bezugszeichenliste

- 1: Türgerippe
- 2: Schloßträger, Druckgußteil
- 3: Scharnierträger, Druckgußteil
- 30: Scharnierträger
- 4: Untergurtprofil
- 5: Fensterrahmen
- 6: Fensterschachtprofil
- 7: Fensterführungsprofil
- 8: Bereich der Schamieranbindung
- 9,10: Bördelkanten
- 11: türseitiges Schamier
- 12,13: Enden des Untergurtprofiles
- 14: Stänznieten
- 15: Unterseite
- 16: Bördelkante
- 17: Spiegeldreieck
- 18: Türbrüstung
- 19: Bereich
- 20: Außenhautblech

## Patentansprüche

1. Fahrzeugtür mit einer Außenwand, einer Innenwand und einem Türgerippe (1), welches sowohl einen Schlossträger (2) und einen Scharnierträger (3, 30) als auch ein den Schloss- und den Scharnierträger unterseitig verbindendes Untergurtprofil (4) umfasst, wobei Schloss- und Scharnierträger (2, 3, 30) jeweils aus einem Leichtmetall-Gussteil bestehen, wobei es sich bei dem Untergurtprofil (4) um ein Strangpressprofil oder ein Rollprofil handelt, und wobei das Untergurtprofil (4) an dem Schlossträger (2) und an dem Scharnierträger (3, 30) mit Hilfe von Nietverbindungen befestigt ist, bei deren Nieten es sich um Stanznieten (14) handelt, und wobei das Untergurtprofil (4) an seiner Unterseite (15), sowie der Schlossträger (2) und der Scharnierträger (3, 30) jeweils in den an diese Unterseite (15) angrenzenden Bereichen (9, 19), mit einer Bördelkante versehen sind.

2. Fahrzeugtür nach Anspruch 1, **dadurch gekennzeichnet, dass** es sich beim dem Schloss- und dem Scharnierträger (2, 3, 30) um mittels Vacuralguss, Thixocasting oder Thixomoulding hergestellte Teile handelt.

3. Fahrzeugtür nach Anspruch 1 oder 2, **dadurch gekennzeichnet, dass** die türseitigen Scharniere (11) direkt in den Scharnierträger (3, 30) integriert sind.

4. Fahrzeugtür nach einem der Ansprüche 1 bis 3, **dadurch gekennzeichnet, dass** das Untergurtprofil (4) aus einer Leichtmetalllegierung besteht.

5. Fahrzeugtür nach einem der Ansprüche 1 bis 4, **dadurch gekennzeichnet, dass** der Schlossträger (2) und/oder der Scharnierträger (3, 30) jeweils in Bereichen unterschiedlicher Belastung eine an die jeweilige Belastung angepasste Wandstärke aufweist.

6. Fahrzeugtür nach einem der Ansprüche 1 bis 5, **dadurch gekennzeichnet, dass** der Scharnierträger (30) im Bereich unterhalb der Türbrüstung (18) der inneren Kontur der entsprechenden Fahrzeugtür folgt und im Bereich (19) oberhalb der Türbrüstung (18) nach außen bricht und die Türaußenfläche darstellt.

## Claims

1. A vehicle door with an exterior skin, an interior skin and a door rib arrangement (1) comprising both a lock carrier (2) and a hinge carrier (3, 30) as well as a bottom member profile (4) connecting the lock carrier and the hinge carrier on the underside, with the lock carrier and the hinge carrier (2, 3, 30) comprising a light metal cast component, wherein the bottom member profile (4) is an extruded profile or a rolled profile and wherein the bottom member profile (4) is attached to the lock carrier (2) and the hinge carrier (3, 30) by means of rivet connections, in which the rivets are punch rivets (14), and wherein the bottom member profile (4) is provided with an edged border on its underside (15) and the lock carrier (2) and the hinge carrier (3, 30) are provided with an edged border in the regions (9, 19) adjoining this underside (15).

2. The vehicle door according to claim 1, **characterised in that** the lock carrier and the hinge carrier (2, 3, 30) are components produced by means of vacural casting, thixocasting or thixomoulding.

3. The vehicle door according to claim 1 or 2, **characterised in that** the hinges (11) on the door side are directly integrated in the hinge carrier (3, 30).

4. The vehicle door according to one of claims 1 to 3, **characterised in that** the bottom member profile (4) is a light metal alloy.

5. The vehicle door according to one of claims 1 to 4, **characterised in that** in regions where different loads are experienced, the wall thickness of the lock carrier (2) and/or hinge carrier (3, 30) matches the respective load.

6. The vehicle door according to one of claims 1 to 5, **characterised in that** in the region below the door breastwork (18), the hinge carrier (30) follows the interior contour of the respective vehicle door, while in the region (19) above the door breastwork (18) it progresses outward so as to form the exterior surface of the door.

## Revendications

1. Porte de véhicule avec une paroi extérieure, une paroi intérieure et une ossature de portière (1), laquelle comprend aussi bien un élément porteur de serrure (2) et un élément porteur de charnières (3,30) qu'un profilé de membrure inférieure (4) qui relie par le bas ces deux éléments porteurs, ces derniers (2,3,20) étant chacun constitués par une pièce coulée en métal léger, le profilé de membrure inférieure (4) étant un profilé filé, estampé ou roulé, le profilé de membrure inférieure (4) étant fixé sur l'élément porteur de serrure (2) et sur l'élément porteur de charnières (3,30) par l'intermédiaire de liaisons rivées, dans lesquelles les rivets sont des rivets poinçonnés et le profilé de membrure inférieure (4), au niveau de sa surface inférieure (15), ainsi que l'élément porteur de serrure (2) et l'élément porteur de charnières (3,30), dans les parties (9, 19) voisines de ladite surface inférieure (15), étant pourvus chacun d'un bord replié.

2. Porte de véhicule selon la revendication 1, **caractérisée en ce que** les éléments porteurs de serrure et de charnières (2,3,30) sont des pièces réalisées par coulée par serrage à pression sous vide, par thixocoulage ou thixomoulage.

3. Porte de véhicule selon l'une des revendications 1 ou 2, **caractérisée en ce que** les charnières (11) situées du côté portière sont directement intégrées dans les éléments porteurs de charnière (3,30).

4. Porte de véhicule selon l'une des revendications 1 à 3, **caractérisée en ce que** le profilé de membrure inférieure (4) est réalisé dans un alliage léger.

5. Porte de véhicule selon l'une des revendications 1 à 4, **caractérisée en ce que** dans leurs zones respectives de sollicitation différente, l'élément porteur de serrure (2) et/ou l'élément porteur de charnières (3,30) présentent une épaisseur de paroi adaptée à la sollicitation respective.

6. Porte de véhicule selon l'une des revendications 1 à 5, **caractérisée en ce que** l'élément porteur de charnières (30) suit le contour intérieur de la portière dans la partie située en-dessous de la zone d'appui (18) et s'interrompt vers l'extérieur dans la partie située au-dessus de cette zone (19) d'appui (18) pour former la partie extérieure de la portière.
